# EUROPEAN PATENT SPECIFICATION

(11) **EP 4 074 803 B1**
(45) Date of publication and mention of the grant of the patent: **19.11.2025**
(21) Application number: 20900470.4
(22) Date of filing: 27.11.2020
(51) Int. Cl.: C09J 121/02, C09J 161/12, D06M 13/395, D06M 15/41, D06M 15/693, B60C 9/00

(54) **METHOD FOR PRODUCING ADHESIVE COMPOSITION, RUBBER/ORGANIC FIBER CORD COMPOSITE, AND TIRE**
VERFAHREN ZUR HERSTELLUNG EINER KLEBSTOFFZUSAMMENSETZUNG, KAUTSCHUK/ORGANISCHES FASERKORDVERBUNDMATERIAL UND REIFEN
PROCÉDÉ DE PRODUCTION DE COMPOSITION ADHÉSIVE, COMPOSITE CAOUTCHOUC/CORDON CÂBLÉ DE FIBRES ORGANIQUES ET PNEU

(30) Priority: 09.12.2019 JP 2019222464
(43) Date of publication of application: 19.10.2022
(73) Proprietor: BRIDGESTONE CORPORATION, Chuo-ku Tokyo 104-8340 (JP)
(72) Inventor: TAKAHASHI Yuka, Tokyo 104-8340 (JP); NAKAMURA Masaaki, Tokyo 104-8340 (JP)
(74) Representative: Marks & Clerk LLP
(86) International application number: PCT/JP2020/044385
(87) International publication number: WO 2021/117520

(56) References cited:
- EP-A1- 2 739 691
- EP-A1- 3 102 407
- EP-A1- 3 458 504
- EP-B1- 2 739 691
- EP-B1- 3 102 407
- EP-B1- 3 458 504
- JP-A- 2014 528 970

## Description

### TECHNICAL FIELD

The present disclosure relates to an adhesive composition, a method of producing an adhesive composition, a rubber-organic fiber cord composite, and a tire.

### BACKGROUND

Organic fibers such as polyester fibers have high initial elastic modulus and excellent thermal dimensional stability, and therefore are very useful as reinforcing material of rubber articles such as tires, belts, air springs, and rubber hoses in the form of filaments, cords, cables, cord fabric, canvas, etc. To improve the adhesiveness between such fibers and rubbers, various adhesive compositions are conventionally proposed. For example, techniques of using, as an adhesive composition, an RFL (resorcin formalin latex) adhesive containing resorcin, formalin, rubber latex, and the like and heat curing the RFL adhesive to ensure adhesiveness are known (for example, see PTL 1 to PTL 3).

Regarding adhesive compositions, techniques of using resorcin formalin resin obtained by initial condensation of resorcin and formalin (for example, see PTL 4 and PTL 5) and techniques of pretreating a tire cord made of polyester fiber or the like using epoxy resin to improve adhesiveness are also known.

Regarding adhesive compositions, techniques of using resorcin formalin resin obtained by initial condensation of resorcin and formalin (see PTL 4 and PTL 5) and techniques of pretreating a tire cord made of polyester fiber or the like using epoxy resin to improve adhesiveness are also known.

Formalin which is commonly used in the foregoing adhesive compositions is an important raw material for crosslinking resorcin. However, there is a need to reduce usage of formalin in view of working environments in recent years. Likewise, reduction in usage of resorcin is needed from an environmental viewpoint.

Hence, some environmentally conscious adhesive compositions not containing resorcin and formalin and adhesion methods are proposed (for example, see PTL 6). However, adhesive compositions not containing resorcin and formalin take time for curing and therefore are inferior in productivity, and also have room for further

improvement in terms of adhesiveness.

Patent documents EP3102407, EP 2739691 and JP 2014 528970 relate to further adhesive compositions for coating a steel cord.

### CITATION LIST

### Patent Literature

PTL 1: JP S58-2370 A
PTL 2: JP S60-92371 A
PTL 3: JP S60-96674 A
PTL 4: JP S63-249784 A
PTL 5: JP S63-61433 B2
PTL 6: JP 2010-255153 A

### SUMMARY

### (Technical Problem)

It could therefore be helpful to provide a method of producing an adhesive composition that can achieve excellent adhesiveness and productivity even when formalin and resorcin are not contained.

It could also be helpful to provide a rubber-organic fiber cord composite and a tire that are environmentally friendly and have excellent adhesiveness between a rubber and an organic fiber cord.

### (Solution to Problem)

As a result of conducting study, we learned that there is a possibility that, by containing a specific polyphenol and aldehyde having aromatic ring in an adhesive composition, high adhesiveness can be achieved even without using formalin and resorcin. In the case of simply using polyphenol and aldehyde having aromatic ring, however, these compounds do not dissolve in a solvent in the adhesive composition, and cannot be used as components of the adhesive composition. We then conducted further study, and discovered that, by containing a specific concentration of ammonia water in the adhesive composition, the polyphenol and the aldehyde can be reliably dissolved and excellent adhesiveness and productivity can be achieved.

A method of producing an adhesive composition according to the present disclosure is a method of producing an adhesive composition for organic fiber cords, the method comprising: adding a sodium hydroxide solution and ammonia water into a solution in which polyphenol is dissolved; and thereafter adding aldehyde having aromatic ring into the solution and dissolving the aldehyde having aromatic ring.

With this structure, excellent adhesiveness and productivity can be achieved even when formalin and resorcin are not contained.

Preferably, the method of producing an adhesive composition according to the present disclosure further comprises adding rubber latex after the dissolution of the aldehyde having aromatic ring. Better adhesiveness and productivity can thus be achieved.

Preferably, the method of producing an adhesive composition according to the present disclosure further comprises adding an isocyanate compound after the addition of the rubber latex. Better adhesiveness can thus be achieved.

Preferably, in the method of producing an adhesive composition according to the present disclosure, the polyphenol has three or more hydroxyl groups. Better adhesiveness can thus be achieved.

Preferably, in the method of producing an adhesive composition according to the present disclosure, the aldehyde has two or more aldehyde groups. Better adhesiveness can thus be achieved.

Preferably, in the method of producing an adhesive composition according to the present disclosure, a concentration of the ammonia water is 5 % to 50 %. Better adhesiveness and productivity can thus be achieved.

Preferably, in the method of producing an adhesive composition according to the present disclosure, a content of the ammonia water after drying in terms of solid content is 0.1 mass% to 5.0 mass%. Better adhesiveness and productivity can thus be achieved.

Preferably, in the method of producing an adhesive composition according to the present disclosure, a concentration of the sodium hydroxide solution is 0.1 mol/L to 3 mol/L. Better adhesiveness and productivity can thus be achieved.

Preferably, in the method of producing an adhesive composition according to the present disclosure, a content of the sodium hydroxide solution after drying in terms of solid content is 1.0 mass% to 10 mass%. Better adhesiveness and productivity can thus be achieved.

A rubber-organic fiber cord composite according to the present disclosure is a rubber-organic fiber cord composite comprising: a rubber member; and an organic fiber cord, wherein at least part of the organic fiber cord is coated with an adhesive composition produced by the foregoing method of producing an adhesive composition according to the present disclosure.

This structure is environmentally friendly and has improved adhesiveness between the rubber and the organic fiber cord.

A tire according to the present disclosure is a tire comprising the foregoing rubber-organic fiber cord composite according to the present disclosure.

This structure is environmentally friendly and has improved adhesiveness between the rubber and the organic fiber cord.

### (Advantageous Effect)

It is thus possible to provide a method of producing an adhesive composition that can achieve excellent adhesiveness and productivity even when formalin and resorcin are not contained. It is also possible to provide a rubber-organic fiber cord composite and a tire that are environmentally friendly and have excellent adhesiveness between a rubber and an organic fiber cord.

### DETAILED DESCRIPTION

### <Method of Producing Adhesive Composition>

An embodiment of a method of producing an adhesive composition according to the present disclosure will be described in detail below.

The method of producing an adhesive composition according to the present disclosure is a method of producing an adhesive composition for organic fiber cords, comprising: adding a sodium hydroxide solution and ammonia water into a solution in which polyphenol is dissolved; and thereafter adding aldehyde having aromatic ring into the solution and dissolving the aldehyde having aromatic ring.

As a result of a specific polyphenol and aldehyde having aromatic ring being contained in the adhesive composition, high adhesiveness can be achieved even without using formalin and resorcin. However, in particular aldehyde having aromatic rings have a problem in that they are poorly soluble and cannot be used as components in adhesive compositions by simple blending and mixing. In view of this, in the production method according to the present disclosure, a sodium hydroxide solution and ammonia water are added into a solution in which polyphenol is dissolved, and thereafter aldehyde having aromatic ring is added. In this way, the aldehyde can be reliably dissolved, and the productivity can be improved in addition to achieving excellent adhesiveness.

### (Solution in which Polyphenol is Dissolved)

The solution in which the polyphenol is dissolved is a solution obtained by dissolving the polyphenol in a solvent.

In the method of producing an adhesive composition according to the present disclosure, the polyphenol is contained as a resin component. As a result of the polyphenol being contained in the adhesive composition, the adhesiveness of the resin composition can be enhanced.

The polyphenol is not limited as long as it is water-soluble and other than resorcin (resorcinol), and the number of aromatic rings and the number of hydroxyl groups may be selected as appropriate.

The polyphenol preferably has a plurality of hydroxyl groups and more preferably has three or more hydroxyl groups, from the viewpoint of achieving better adhesiveness.

In the case where the polyphenol contains a plurality of (i.e. two or more) aromatic rings, it is more preferable that, in these aromatic rings, two or three hydroxyl groups are supported at the respective meta positions or the ortho positions of these hydroxyl functional groups are not substituted. This means that two carbon atoms located on both sides of a hydroxylated carbon atom (i.e. a position supporting a hydroxyl group) are not substituted.

Examples of the polyphenol having three or more hydroxyl groups include
phloroglucinol: 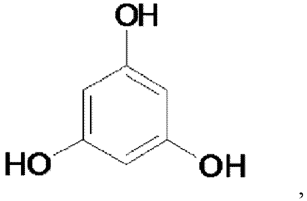
morin (2',4',3,5,7-pentahydroxyflavone): 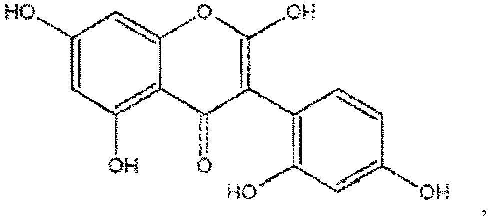 and
phloroglucide (2,4,6,3,'5'-biphenylpentol):

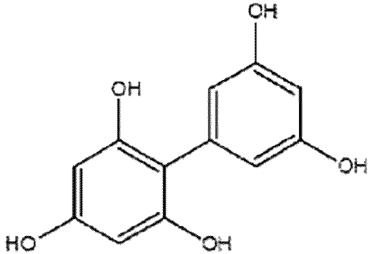

The content of the polyphenol after drying (solid content) in the adhesive composition is preferably 2.5 mass% or more, more preferably 3.0 mass% or more, and further preferably 3.5 mass% or more, from the viewpoint of ensuring better adhesiveness. The content of the polyphenol after drying (solid content) is preferably 15 mass% or less, more preferably 13 mass% or less, and further preferably 11 mass% or less, from the viewpoint of obtaining better operability.

The solvent for dissolving the polyphenol is not limited, and examples include water and a sodium hydroxide solution. The solvent preferably contains both water and a sodium hydroxide solution, from the viewpoint of dissolving the polyphenol more reliably.

The temperature of the water is preferably 40 °C or more and more preferably 45 °C or more, from the viewpoint of dissolving the polyphenol more reliably.

### (Ammonia Water)

In the method of producing an adhesive composition according to the present disclosure, ammonia water is added into the solution in which the polyphenol is dissolved. The ammonia water enables the polyphenol and the aldehyde having aromatic ring to be dissolved reliably, so that high adhesiveness can be imparted to the adhesive composition and the productivity of the adhesive composition can be enhanced. In particular, while the polyphenol is water-soluble, the aldehyde having aromatic ring (described later) is poorly soluble. In the present disclosure, a specific concentration of ammonia water is used to ensure that the aldehyde having aromatic ring is dissolved.

The concentration of the ammonia water is preferably 5 % to 50 %. If the concentration of the ammonia water is 5 % or more, in particular the aldehyde having aromatic ring can be dissolved reliably. From the same viewpoint, the concentration of the ammonia water is preferably 10 % or more, and more preferably 15 % or more. If the concentration of the ammonia water is 50 % or less, the heat-resistant adhesiveness can be maintained. From the same viewpoint, the concentration of the ammonia water is preferably 40 % or less, and more preferably 35 % or less.

The content of the ammonia water after drying (solid content) in the adhesive composition according to the present disclosure is preferably 0.5 mass% to 5.0 mass%, from the viewpoint of better productivity and adhesiveness.

### (Sodium Hydroxide Solution)

In the method of producing an adhesive composition according to the present disclosure, a sodium hydroxide solution is added into the solution in which the polyphenol is dissolved, together with the ammonia water. The use of the sodium hydroxide solution together with the ammonia water enables the polyphenol and the aldehyde having aromatic ring to be dissolved reliably, so that high adhesiveness can be imparted to the adhesive composition and the productivity of the adhesive composition can be enhanced. In particular, while the polyphenol is water-soluble, the aldehyde having aromatic ring is poorly soluble. The use of the sodium hydroxide solution enables the aldehyde having aromatic ring to be dissolved more reliably, and further enhances the productivity.

The concentration of the sodium hydroxide solution is not limited, but is preferably 0.1 mol/L or more from the viewpoint of dissolving the polyphenol and the aldehyde having aromatic ring more reliably. From the same viewpoint, the concentration of the sodium hydroxide solution is preferably 0.3 mol/L or more, and more preferably 0.6 mol/L or more. The concentration of the sodium hydroxide solution is preferably 3 mol/L or less, from the viewpoint of maintaining the heat-resistant adhesiveness. From the same viewpoint, the concentration of the sodium hydroxide solution is preferably 2 mol/L or less, and more preferably 1. 5 mol/L or less.

The content of the sodium hydroxide solution after drying (solid content: sodium hydroxide) in the adhesive composition according to the present disclosure is not limited, but is preferably 0.1 mass%, more preferably 0.3 mass% or more, and further preferably 0.5 mass% or more from the viewpoint of dissolving the polyphenol and the aldehyde having aromatic ring more reliably.

The content of the sodium hydroxide solution after drying (solid content: sodium hydroxide) in the adhesive composition according to the present disclosure is preferably 5 mass% or less, more preferably 4 mass% or less, and further preferably 3 mass% or less, from the viewpoint of enhancing the concentrations of the polyphenol and the aldehyde having aromatic ring and achieving better adhesiveness.

The pH of the adhesive composition according to the present disclosure containing the ammonia water and the sodium hydroxide solution is not limited, but is preferably 8 to 14 and more preferably 9 to 13 from the viewpoint of improving the solubility.

### (Aldehyde having aromatic ring)

In the method of producing an adhesive composition according to the present disclosure, after adding the ammonia water and the sodium hydroxide, the aldehyde having aromatic ring is added.

As a result of the aldehyde having aromatic ring being contained in the adhesive composition together with the polyphenol, high adhesiveness can be achieved.

The aldehyde having aromatic ring is not limited, and the number of aromatic rings and the number of aldehyde groups may be selected as appropriate. The aldehyde having aromatic ring does not contain formaldehyde.

Herein, the expression "not containing formaldehyde" means that the mass content of formaldehyde with respect to the total mass of the aldehyde is less than 0.5 mass%.

The aldehyde having aromatic ring preferably has two or more aldehyde groups, from the viewpoint of achieving better adhesiveness. As a result of the aldehyde crosslinking by the plurality of aldehyde groups and condensing, the degree of crosslinking of the thermosetting resin can be increased, and thus the adhesiveness can be further enhanced.

In the case where the aldehyde has two or more aldehyde groups, it is more preferable that two or more aldehyde groups are present in one aromatic ring. Each aldehyde group can be present at the ortho, meta, or para position in one aromatic ring.

Examples of the aldehyde include 1,2-benzenedicarboxaldehyde, 1,3-benzenedicarboxaldehyde, 1,4-benzenedicarboaldehyde, 2-hydroxybenzene-1,3,5-tricarbaldehyde, and mixtures of these compounds.

Of these, at least 1,4-benzenedicarboxaldehyde is preferably used as the aldehyde having aromatic ring, from the viewpoint of achieving better adhesiveness:

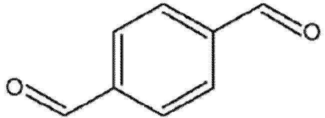

Examples of the aldehyde having aromatic ring include not only benzene ring-containing aldehydes but also heteroaromatic compounds.

An example of aldehydes that are heteroaromatic compounds is the following furan ring-containing aldehyde: 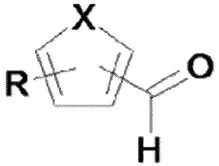 (where X includes N, S, or O, and R represents -H or -CHO).

The furan ring-containing aldehyde is, for example, the following compound: 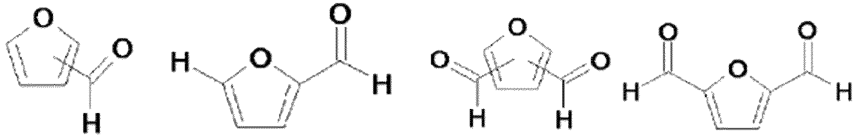 (where R represents -H or -CHO, and R1, R2, and R3 each represent an alkyl, aryl, arylalkyl, alkylaryl, or cycloalkyl group).

The content of the aldehyde having aromatic ring after drying (solid content) in the adhesive composition according to the present disclosure is not limited, but is preferably 1.0 mass% or more, more preferably 2.0 mass% or more, and further preferably 2.5 mass% or more from the viewpoint of ensuring better adhesiveness.

The content of the aldehyde having aromatic ring after drying (solid content) in the adhesive composition according to the present disclosure is preferably 11 mass% or less, more preferably 10 mass% or less, and further preferably 9 mass% or less, from the viewpoint of dissolving the aldehyde having aromatic ring reliably and obtaining better operability.

### (Rubber Latex)

In the method of producing an adhesive composition according to the present disclosure, after adding the aldehyde having aromatic ring, rubber latex may be further added.

As a result of adding the rubber latex, the adhesiveness of the obtained adhesive composition to a rubber member can be further improved.

The rubber latex is not limited. Examples of the rubber latex that can be used include natural rubber (NR) and synthetic rubbers such as polyisoprene rubber (IR), styrene-butadiene copolymer rubber (SBR), polybutadiene rubber (BR), ethylene-propylene-diene rubber (EPDM), chloroprene rubber (CR), halogenated butyl rubber, acrylonitrile-butadiene rubber (NBR), and vinylpyridine-styrene-butadiene copolymer rubber (Vp). These rubber components may be used alone or in a blend of two or more.

The content of the rubber latex in the adhesive composition according to the present disclosure in terms of solid content (i.e. the ratio as dry matter) is not limited, but is preferably 40 mass% to 99 mass% and more preferably 70 mass% to 95 mass%.

In the method of producing an adhesive composition according to the present disclosure, in the case of adding the rubber latex, it is more preferable to age the rubber latex after the addition. In this way, the latex is coagulated more reliably, so that the handling easiness of the adhesive composition can be improved and the adhesiveness of the adhesive composition can be enhanced.

Herein, the aging of the rubber latex denotes letting a certain time pass after adding and mixing the latex in order to improve the properties of the latex. The aging conditions are not limited. For example, the rubber latex can be aged at 20 °C or more and preferably 40 °C or more for preferably 2 hr or more.

### (Isocyanate Compound)

In the method of producing an adhesive composition according to the present disclosure, an isocyanate compound may be further added.

As a result of adding the isocyanate compound, the adhesiveness of the obtained adhesive composition can be further improved.

In the method of producing an adhesive composition according to the present disclosure, the timing of adding the isocyanate compound is not limited, but is preferably after the addition of the rubber latex. This enhances the adhesion facilitating function for resin material by the isocyanate compound, and achieves better adhesiveness.

Herein, the isocyanate compound is a compound that has a function of facilitating adhesion to resin material (for example, polyphenol and aldehyde having aromatic ring) which is the adherend of the adhesive composition and has at least one isocyanate group as a polar functional group.

The type of the isocyanate compound is not limited, but is preferably a (blocked) isocyanate group-containing aromatic compound from the viewpoint of further improving the adhesiveness. When the isocyanate compound is contained in the adhesive composition according to the present disclosure, the (blocked) isocyanate group-containing aromatic distributes in the vicinity of the interface between the adherend fiber and the adhesive composition, thus producing the adhesion facilitating effect. With this functional effect, the adhesion to the organic cord can be further enhanced.

The (blocked) isocyanate group-containing aromatic compound is an aromatic compound having a (blocked) isocyanate group. Herein, the term "(blocked) isocyanate group" denotes a blocked isocyanate group or an isocyanate group, and includes not only an isocyanate group but also a blocked isocyanate group resulting from reaction with a blocking agent for isocyanate groups, an isocyanate group unreacted with a blocking agent for isocyanate groups, and an isocyanate group resulting from dissociation of a blocking agent of a blocked isocyanate group.

The (blocked) isocyanate group-containing aromatic compound preferably contains a molecular structure in which aromatics are bonded by an alkylene chain, and more preferably contains a molecular structure in which aromatics are methylene-bonded. Examples of the molecular structure in which aromatics are bonded by an alkylene chain include molecular structures in diphenylmethane diisocyanate, polyphenylene polymethylene polyisocyanate, or condensates of phenols and formaldehyde.

Examples of the (blocked) isocyanate group-containing aromatic compound include a compound containing aromatic polyisocyanate and a thermally dissociative blocking agent, a water-dispersible compound containing a component obtained by blocking diphenylmethane diisocyanate or aromatic polyisocyanate by a thermally dissociative blocking agent, and an aqueous urethane compound.

A preferred example of the compound containing aromatic polyisocyanate and a thermally dissociative blocking agent is a blocked isocyanate compound containing diphenylmethane diisocyanate and a known isocyanate blocking agent. An example of the water-dispersible compound containing a component obtained by blocking diphenylmethane diisocyanate or aromatic polyisocyanate by a thermally dissociative blocking agent is a reaction product obtained by blocking diphenylmethane diisocyanate or polymethylene polyphenyl polyisocyanate by a known blocking agent for blocking isocyanate groups. Specifically, commercially available blocked polyisocyanate compounds such as ELASTRON BN69 and ELASTRON BN77 (produced by DKS Co. Ltd.) and MEIKANATE TP-10 (produced by Meisei Chemical Works, Ltd.) are available.

The aqueous urethane compound is obtained by reaction of an organic polyisocyanate compound (α) containing a molecular structure in which aromatics are bonded by an alkylene chain and preferably containing a molecular structure in which aromatics are methylene-bonded, a compound (β) containing a plurality of active hydrogen, and a thermally dissociative blocking agent (γ) for isocyanate groups. The aqueous urethane compound (F), with its flexible molecular structure, has not only a function as an adhesion improving agent but also a function of suppressing fluidization of the adhesive at high temperature as a flexible crosslinking agent.

Herein, the term "aqueous" denotes being water-soluble or water-dispersible. The term "water-soluble" denotes not only being completely water-soluble but also being partially water-soluble or not undergoing phase separation in a water solution of the adhesive composition according to the present disclosure.

As the aqueous urethane compound (F), for example, an aqueous urethane compound expressed by the following general formula (I) is preferable: 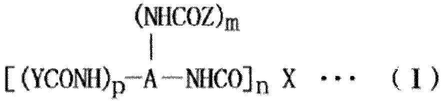 (where A is a residue resulting from elimination of active hydrogen of the organic polyisocyanate compound (α) containing a molecular structure in which aromatics are bonded by an alkylene chain, Y is a residue resulting from elimination of active hydrogen of the thermally dissociative blocking agent (γ) for isocyanate groups, Z is a residue resulting from elimination of active hydrogen of a compound (δ), X is a residue resulting from elimination of active hydrogen of the compound (β) having a plurality of active hydrogen, n is an integer of 2 to 4, and p + m is an integer of 2 to 4 (m ≥ 0.25)).

Examples of the organic polyisocyanate compound (α) containing a molecular structure in which aromatics are bonded by an alkylene chain include methylene diphenyl polyisocyanate and polymethylene polyphenyl polyisocyanate.

The compound (β) having a plurality of active hydrogen is preferably a compound having two to four active hydrogen and having an average molecular weight of 5,000 or less. Examples of such compound (β) include (i) polyhydric alcohols having two to four hydroxyl groups, (ii) polyamines having two to four primary and/or secondary amino groups, (iii) aminoalcohols having two to four primary and/or secondary amino groups and hydroxyl groups, (iv) polyester polyols having two to four hydroxyl groups, (v) polybutadiene polyols having two to four hydroxyl groups and copolymers thereof with other vinyl monomers, (vi) polychloroprene polyols having two to four hydroxyl groups and copolymers thereof with other vinyl monomers, and (vii) polyether polyols having two to four hydroxyl groups and being C2 to C4 alkylene oxide polyaddition products of polyamines, polyhydric phenols, and aminoalcohols, C2 to C4 alkylene oxide polyaddition products of polyhydric alcohols of C3 or more, C2 to C4 alkylene oxide copolymers, and C3 to C4 alkylene oxide polymers.

The thermally dissociative blocking agent (γ) for isocyanate groups is a compound capable of liberating isocyanate groups by heat treatment, and may be, for example, a known isocyanate blocking agent.

The compound (δ) is a compound having at least one active hydrogen and anionic and/or nonionic hydrophilic group. Examples of the compound having at least one active hydrogen and anionic hydrophilic group include aminosulfonic acids such as taurine, N-methyltaurine, N-butyltaurine, and sulfanilic acid, and aminocarboxylic acids such as glycine and alanine. Examples of the compound having at least one active hydrogen and nonionic hydrophilic group include compounds having a hydrophilic polyether chain.

The content of the isocyanate compound in the adhesive composition according to the present disclosure is not limited, but is preferably in a range of 15 mass% to 70 mass% from the viewpoint of ensuring excellent adhesiveness more reliably. The content of the isocyanate compound is in terms of mass of dry matter (solid content ratio).

### (Other Components)

In the method of producing an adhesive composition according to the present disclosure, in addition to the foregoing polyphenol, aldehyde having aromatic ring, ammonia water, and sodium hydroxide solution and rubber latex and isocyanate compound as optional components, other components such as an epoxy compound, a colorant, a filler, an antioxidant, a stabilizer, and water may be further added.

In the method of producing an adhesive composition according to the present disclosure, the adhesive composition may be composed of a one-bath treatment liquid or a two-bath treatment liquid.

One-bath treatment is a process of dipping an organic fiber cord subjected to adhesion in one treatment liquid (adhesive composition) to adhere the adhesive composition to the surface of the organic fiber cord.

Two-bath treatment is a process of dipping an organic fiber cord subjected to adhesion in two treatment liquids in sequence to adhere the adhesive composition to the surface of the organic fiber cord. That is, in the case where the obtained adhesive composition is a two-bath treatment liquid, the adhesive composition is a combination of the first bath treatment liquid and the second bath treatment liquid.

In the case where the adhesive composition is composed of a one-bath treatment liquid, for example, the foregoing components are added in the following order: After the solvent for dissolving the polyphenol, the isocyanate compound, and the other components such as an epoxy compound are added, the polyphenol is added to form the solution in which the polyphenol is dissolved, and then the ammonia water is added and thereafter the aldehyde having aromatic ring is added to prepare a treatment liquid. The organic fiber cord is then dipped in the treatment liquid, as a result of which the organic fiber cord can be coated with the adhesive composition.

In the case where the adhesive composition is composed of a two-bath treatment liquid, for example, the isocyanate compound and the other components such as an epoxy compound are added to prepare a one-bath treatment liquid, and the organic fiber cord is dipped in the one-bath treatment liquid. Following this, the polyphenol is added to the specific solvent to form the solution in which the polyphenol is dissolved, and then the ammonia water is added and thereafter the aldehyde having aromatic ring is added to prepare a two-bath treatment liquid. The organic fiber cord dipped in the one-bath treatment liquid is then dipped in the two-bath treatment liquid, as a result of the organic fiber cord can be coated with the adhesive composition.

### <Rubber-Organic Fiber Cord Composite>

A rubber-organic fiber cord composite according to the present disclosure is a rubber-organic fiber cord composite comprising a rubber member and an organic fiber cord, wherein at least part of the organic fiber cord is coated with an adhesive composition produced by the foregoing production method according to the present disclosure.

Since the rubber-organic fiber cord composite according to the present disclosure uses the adhesive composition produced by the production method according to the present disclosure, the rubber-organic fiber cord composite is environmentally friendly and has excellent adhesiveness between the rubber and the organic fiber cord.

The application of the rubber-organic fiber cord composite according to the present disclosure is not limited, and the rubber-organic fiber cord composite can be used, for example, as a member of a belt, an air spring, a hose, or the like.

The type of the organic fiber cord is not limited, and may be selected as appropriate according to the purpose. For example, when using the organic fiber cord as reinforcing material, a monofilament cord of raw yarn of a spun organic fiber or a twisted cord obtained by twisting a multifilament cord can be used as the organic fiber cord. The organic fiber cord is then buried in the rubber for coating the organic fiber cord using the adhesive composition and vulcanization is performed to cause adhesion, thus forming the organic fiber cord-rubber composite. The organic fiber cord-rubber composite can be used as a reinforcement member of a rubber article such as a tire.

The material of the organic fiber cord is not limited. Examples of materials that can be used include resin fiber materials such as polyethylene terephthalate (PET) fiber cords, aliphatic polyamide fiber cords of polyester, 6-nylon, 6,6-nylon, 4,6-nylon, etc., protein fiber cords such as artificial fibroin fibers, polyketone fiber cords, aromatic polyamide fiber cords of polynonamethylene terephthalamide, paraphenylene terephthalamide, etc., acrylic fiber cords, carbon fiber cords, and cellulose fiber cords of rayon, lyocell, etc., and mixtures of these fiber materials.

In the rubber-organic fiber cord composite according to the present disclosure, at least part of the organic fiber cord is coated with the adhesive composition produced by the production method according to the present disclosure. From the viewpoint of further improving the adhesiveness between the rubber and the organic fiber cord, the whole surface of the organic fiber cord is preferably coated with the adhesive composition according to the present disclosure.

### <Tire>

A tire according to the present disclosure comprises the foregoing rubber-organic fiber cord composite according to the present disclosure.

In the tire according to the present disclosure, the rubber-organic fiber cord composite according to the present disclosure can be used, for example, as a carcass ply, a belt layer, a belt reinforcement layer, or a belt periphery reinforcement layer such as a flipper.

A pneumatic tire according to the present disclosure is not limited as long as the foregoing rubber article is used, and can be produced according to a usual method. A gas with which the tire is filled may be normal air or air with adjusted oxygen partial pressure, or an inert gas such as nitrogen, argon, or helium.

### EXAMPLES

The presently disclosed techniques will be described in more detail below by way of examples, although the present disclosure is not limited to these examples.

Adhesive compositions as samples were prepared according to the following production conditions (production examples 1 to 6), and whether a desired adhesive composition was able to be produced was determined for each production example.

### (1) Production Example 1 of Adhesive Composition (Comparative Example)

9.1 g of 1 mol/L sodium hydroxide and 91.0 g of 100 °C water were added to 3.2 g of 1,4-benzenedicarboxaldehyde, and stirred for 4 hr with the temperature maintained at 60 °C.

Consequently, most of the 1,4-benzenedicarboxaldehyde did not dissolve and precipitated, and a desired adhesive composition was not able to be obtained.

### (2) Production Example 2 of Adhesive Composition (Comparative Example)

3.7 g of 25 % ammonia water and 87.2 g of 100 °C water were added to 3.2 g of 1,4-benzenedicarboxaldehyde, and stirred for 4 hr with the temperature maintained at 60 °C.

Consequently, most the of 1,4-benzenedicarboxaldehyde did not dissolve and particle aggregation occurred, and a desired adhesive composition was not able to be obtained.

### (3) Production Example 3 of Adhesive Composition (Comparative Example)

9.1 g of 1 mol/L sodium hydroxide, 3.7 g of 25 % ammonia water, and 87.2 g of 100 °C water were added to 3.2 g of 1,4-benzenedicarboxaldehyde, and stirred for 4 hr with the temperature maintained at 60 °C.

Consequently, most of the 1,4-benzenedicarboxaldehyde did not dissolve and particle aggregation occurred, and a desired adhesive composition was not able to be obtained.

### (4) Production Example 4 of Adhesive Composition (Comparative Example)

First, phloroglucinol was dissolved in 100 °C water to obtain a 10 % phloroglucinol solution.

Subsequently, 9.1 g of 1 mol/L sodium hydroxide and 75.8 g of 100 °C water were added to 16.8 g of the phloroglucinol solution. After this, while adding 3.2 g of 1,4-benzenedicarboxaldehyde, the solution was stirred for 6 hr with the temperature maintained at 60 °C.

Consequently, the 1,4-benzenedicarboxaldehyde partly dissolved but partly remained undissolved, and a desired adhesive composition was not able to be obtained.

### (5) Production Example 5 of Adhesive Composition (Comparative Example)

First, phloroglucinol was dissolved in 100 °C water to obtain a 10 % phloroglucinol solution.

Subsequently, 3.7 g of 25 % ammonia water and 82.2 g of 100 °C water were added to 16.8 g of the phloroglucinol solution. After this, while adding 3.2 g of 1,4-benzenedicarboxaldehyde, the solution was stirred for 6 hr with the temperature maintained at 60 °C.

Consequently, most of the 1,4-benzenedicarboxaldehyde did not dissolve and formed a suspension, and a desired adhesive composition was not able to be obtained.

### (6) Production Example 6 of Adhesive Composition (Example)

First, phloroglucinol was dissolved in 100 °C water to obtain a 10 % phloroglucinol solution.

Subsequently, 9.1 g of 1 mol/L sodium hydroxide, 3.7 g of 25 % ammonia water, and 82.2 g of 100 °C water were added to 16.8 g of the phloroglucinol solution. After this, while adding 3.2 g of 1,4-benzenedicarboxaldehyde, the solution was stirred for 0.5 hr with the temperature maintained at 60 °C.

Consequently, all of the 1,4-benzenedicarboxaldehyde dissolved, and a desired adhesive composition was able to be obtained. The obtained adhesive composition has high adhesiveness.

Phloroglucinol, 1,4-benzenedicarboxaldehyde, sodium hydroxide, and ammonia used in production examples 1 to 6 are as follows:
* Phloroglucinol: produced by FUJIFILM Wako Pure Chemical Corporation.
* 1,4-benzenedicarboxaldehyde: produced by Tokyo Chemical Industry Co., Ltd.
* Sodium hydroxide: produced by Kanto Chemical Co., Inc., 1N NaOH water solution.
* Ammonia water: produced by Kanto Chemical Co., Inc., 25 % ammonia water solution.

As can be understood from the results of production examples 1 to 6, the adhesive composition produced by the production method according to the present disclosure (production example 6) was superior in productivity to the adhesive compositions produced by the conventional production methods.

### <Adhesiveness Evaluation>

The following adhesiveness evaluation was conducted on the samples of production examples 4 and 6.

A polyester cord for tires coated with the adhesive composition of production example 4 and a polyester cord for tires coated with the adhesive composition of production example 6 were each buried in a rubber composition in an unvulcanized state containing natural rubber, a rubber component composed of a styrene-butadiene copolymer, carbon black, and a crosslinking agent. The resultant test piece was vulcanized at 160 °C for 20 min under pressure of 20 kgf/cm². For the sample of production example 4, a supernatant liquid of the produced adhesive composition was used as the coating liquid for the cord.

The obtained vulcanizate was cooled to room temperature, and the cord was dug up from the vulcanizate. The resistance (N/cord) when separating the cord from the vulcanizate at a speed of 30 cm/min was measured at room temperature (ambient temperature) of 25 ± 1 °C. The resistance was used as an index in the adhesiveness evaluation.

As a result of measuring the resistance upon separation of the test piece using each sample, the resistance upon separation of the test piece using the sample of production example 6 was 111, where the resistance upon separation of the test piece using the sample of production example 4 was 100. This demonstrates that the adhesive composition produced by the production method according to the present disclosure (production example 6) was superior in productivity and adhesiveness to the adhesive composition produced by the conventional production method.

### INDUSTRIAL APPLICABILITY

It is thus possible to provide a method of producing an adhesive composition that can achieve excellent adhesiveness and productivity even when formalin and resorcin are not contained. It is also possible to provide a rubber-organic fiber cord composite and a tire that are environmentally friendly and have excellent adhesiveness between a rubber and an organic fiber cord.

## Claims

1. A method of producing an adhesive composition for organic fiber cords, the method comprising:
adding a sodium hydroxide solution and ammonia water into a solution in which polyphenol is dissolved; and
thereafter adding aldehyde having aromatic ring into the solution and dissolving the aldehyde having aromatic ring.

2. The method of producing an adhesive composition according to claim 1, further comprising
adding rubber latex after the dissolution of the aldehyde having aromatic ring.

3. The method of producing an adhesive composition according to claim 2, further comprising
adding an isocyanate compound after the addition of the rubber latex.

4. The method of producing an adhesive composition according to any one of claims 1 to 3, wherein the polyphenol has three or more hydroxyl groups.

5. The method of producing an adhesive composition according to any one of claims 1 to 4, wherein the aldehyde has two or more aldehyde groups.

6. The method of producing an adhesive composition according to any one of claims 1 to 5, wherein a concentration of the ammonia water is 5 % to 50 %.

7. The method of producing an adhesive composition according to any one of claims 1 to 6, wherein a content of the ammonia water after drying in terms of solid content is 0.1 mass% to 5.0 mass%.

8. The method of producing an adhesive composition according to any one of claims 1 to 7, wherein a concentration of the sodium hydroxide solution is 0.1 mol/L to 3 mol/L.

9. The method of producing an adhesive composition according to any one of claims 1 to 8, wherein a content of the sodium hydroxide solution after drying in terms of solid content is 1.0 mass% to 5.0 mass%.

10. A rubber-organic fiber cord composite comprising:
a rubber member; and
an organic fiber cord,
wherein at least part of the organic fiber cord is coated with an adhesive composition produced by the method according to any one of claims 1 to 9.

11. A tire comprising
the rubber-organic fiber cord composite according to claim 10.

## Patentansprüche

1. Verfahren zum Herstellen einer Klebstoffzusammensetzung für organische Faserkords, wobei das Verfahren Folgendes umfasst:
Hinzugeben einer Natriumhydroxidlösung und von Ammoniakwasser in eine Lösung, in der Polyphenol aufgelöst ist, und
danach Hinzugeben von Aldehyd, das einen aromatischen Ring aufweist, in die Lösung und Auflösen des Aldehyds, das einen aromatischen Ring aufweist.

2. Verfahren zum Herstellen einer Klebstoffzusammensetzung nach Anspruch 1, das ferner Folgendes umfasst:
Hinzugeben von Kautschukmilch nach der Auflösung des Aldehyds, das einen aromatischen Ring aufweist.

3. Verfahren zum Herstellen einer Klebstoffzusammensetzung nach Anspruch 2, das ferner Folgendes umfasst:
Hinzugeben einer Isocyanatverbindung nach dem Hinzugeben der Kautschukmilch.

4. Verfahren zum Herstellen einer Klebstoffzusammensetzung nach einem der Ansprüche 1 bis 3, wobei das Polyphenol drei oder mehr Hydroxylgruppen aufweist.

5. Verfahren zum Herstellen einer Klebstoffzusammensetzung nach einem der Ansprüche 1 bis 4, wobei das Aldehyd zwei oder mehr Aldehydgruppen aufweist.

6. Verfahren zum Herstellen einer Klebstoffzusammensetzung nach einem der Ansprüche 1 bis 5, wobei eine Konzentration des Ammoniakwassers 5 % bis 50 % beträgt.

7. Verfahren zum Herstellen einer Klebstoffzusammensetzung nach einem der Ansprüche 1 bis 6, wobei ein Gehalt des Ammoniakwassers nach dem Trocknen in Bezug auf den Feststoffgehalt 0,1 Masse-% bis 5,0 Masse-% beträgt.

8. Verfahren zum Herstellen einer Klebstoffzusammensetzung nach einem der Ansprüche 1 bis 7, wobei eine Konzentration der Natriumhydroxidlösung 0,1 mol/l bis 3 mol/l beträgt.

9. Verfahren zum Herstellen einer Klebstoffzusammensetzung nach einem der Ansprüche 1 bis 8, wobei ein Gehalt der Natriumhydroxidlösung nach dem Trocknen in Bezug auf den Feststoffgehalt 1,0 Masse-% bis 5,0 Masse-% beträgt.

10. Verbundstoff aus Kautschuk und organischem Faserkord, der Folgendes umfasst:
ein Kautschukelement und
einen organischen Faserkord,
wobei zumindest ein Teil des organischen Faserkords mit einer Klebstoffzusammensetzung überzogen ist, die durch das Verfahren nach einem der Ansprüche 1 bis 9 hergestellt ist.

11. Reifen, der Folgendes umfasst:
den Verbundstoff aus Kautschuk und organischem Faserkord nach Anspruch 10.

## Revendications

1. Procédé de production d'une composition adhésive pour des câblés de fibre organique, le procédé comprenant :
l'ajout d'une solution d'hydroxyde de sodium et d'eau ammoniaquée dans une solution dans laquelle du polyphénol est dissous, et
ensuite, l'ajout d'aldéhyde comportant un noyau aromatique dans la solution et la dissolution de l'aldéhyde comportant un noyau aromatique.

2. Procédé de production d'une composition adhésive selon la revendication 1, comprenant en outre :
l'ajout de latex de caoutchouc après la dissolution de l'aldéhyde comportant un noyau aromatique.

3. Procédé de production d'une composition adhésive selon la revendication 2, comprenant en outre :
l'ajout d'un composé isocyanate après l'ajout du latex de caoutchouc.

4. Procédé de production d'une composition adhésive selon l'une quelconque des revendications 1 à 3, dans lequel le polyphénol comprend trois ou plus de groupes hydroxyle.

5. Procédé de production d'une composition adhésive selon l'une quelconque des revendications 1 à 4, dans lequel l'aldéhyde comprend deux ou plusieurs groupes aldéhyde.

6. Procédé de production d'une composition adhésive selon l'une quelconque des revendications 1 à 5, dans lequel une concentration de l'eau ammoniaquée est de 5 % à 50 %.

7. Procédé de production d'une composition adhésive selon l'une quelconque des revendications 1 à 6, dans lequel une teneur de l'eau ammoniaquée après un séchage en termes de teneur en matières solides est de 0,1 % en masse à 5,0 % en masse.

8. Procédé de production d'une composition adhésive selon l'une quelconque des revendications 1 à 7, dans lequel une concentration de la solution d'hydroxyde de sodium est de 0,1 mol/L à 3 mol/L.

9. Procédé de production d'une composition adhésive selon l'une quelconque des revendications 1 à 8, dans lequel une teneur de la solution d'hydroxyde de sodium après un séchage en termes de teneur en matières solides est de 1,0 % en masse à 5,0 % en masse.

10. Composite de câblé de fibres organiques/caoutchouc, comprenant :
un élément de caoutchouc,
un câblé de fibres organiques,
dans lequel au moins une partie du câblé de fibres organiques est revêtu avec une composition adhésive produite par le procédé selon l'une quelconque des revendications 1 à 9.

11. Pneu comprenant :
le composite de câblé de fibres organiques / caoutchouc selon la revendication 10.
